(19) **Europäisches Patentamt / European Patent Office / Office européen des brevets**

(11) **EP 3 116 181 B1**

(12) # FASCICULE DE BREVET EUROPEEN

(45) Date de publication et mention
de la délivrance du brevet:
**12.07.2017   Bulletin 2017/28**

(51) Int Cl.:
**H04L 27/22** *(2006.01)*      **H04L 7/04** *(2006.01)*

(21) Numéro de dépôt: **16178205.7**

(22) Date de dépôt: **06.07.2016**

(54) **RÉCEPTEUR RFID À TRÈS HAUT DÉBIT**

RFID-EMPFÄNGER MIT SEHR HOHEM DURCHSATZ

RFID RECEIVER WITH VERY HIGH THROUGHPUT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **09.07.2015   FR 1556536**

(43) Date de publication de la demande:
**11.01.2017   Bulletin 2017/02**

(73) Titulaire: **Commissariat à l'énergie atomique et aux énergies alternatives
75015 Paris (FR)**

(72) Inventeurs:
- **COUROUVE, Pierre
  38420 Domene (FR)**
- **DORE, Jean-Baptiste
  38950 Saint-Martin-Le-Vinoux (FR)**
- **PEZZIN, Manuel
  38000 Grenoble (FR)**

(74) Mandataire: **Brevalex
56, Boulevard de l'Embouchure
B.P. 27519
31075 Toulouse Cedex 2 (FR)**

(56) Documents cités:
**US-A1- 2007 071 036      US-A1- 2008 197 982**

- **DAVID SEEBACHER ET AL: "Measurement instrument selection for very high bit rate contactless transponder evaluation", 2011 IEEE INTERNATIONAL CONFERENCE ON RFID-TECHNOLOGIES AND APPLICATIONS, 1 septembre 2011 (2011-09-01), pages 140-147, XP055215979, DOI: 10.1109/RFID-TA.2011.6068629 ISBN: 978-1-45-770028-6**
- **YUAN LIU ET AL: "Digital Correlation Demodulator Design for RFID Reader Receiver", IEEE WIRELESS COMMUNICATIONS AND NETWORKING CONFERENCE, 2007, WCNC 2007, 11 - 15 MARCH 2007, HONG KONG, IEEE OPERATIONS CENTER, PISCATAWAY, NJ, 1 mars 2007 (2007-03-01), pages 1664-1668, XP031097451, ISBN: 978-1-4244-0658-6**
- **CHRISTOPH ANGERER ET AL: "Advanced synchronisation and decoding in RFID reader receivers", RADIO AND WIRELESS SYMPOSIUM, 2009. RWS '09. IEEE, IEEE, PISCATAWAY, NJ, USA, 18 janvier 2009 (2009-01-18), pages 59-62, XP031535115, ISBN: 978-1-4244-2698-0**
- **"ISO/IEC JTC 1/SC 17 N 4254 ISO/IEC JTC 1/SC 17 Cards and personal identification Secretariat: BSI (United Kingdom)", , 14 juillet 2011 (2011-07-14), XP055215983, Extrait de l'Internet: URL:http://wg8.de/wg8n1828_17n4254_Ballot_CD_14443-2_PDAM5_VHBR_PSK.pdf [extrait le 2015-09-24]**

**EP 3 116 181 B1**

**Description**

**DOMAINE TECHNIQUE**

La présente invention concerne de manière générale le domaine des récepteurs RFID (*Radio Frequency Identification*) et plus particulièrement les récepteurs RFID à très haut débit ou VHBR *(Very High Bit Rate).*

**ÉTAT DE LA TECHNIQUE ANTÉRIEURE**

La première génération des systèmes RFID a fait l'objet d'une normalisation dans le standard ISO/IEC 14442-Part 2. Le standard en question prévoit une transmission utilisant une fréquence porteuse *f* de 13,56 MHz avec deux types de modulation : une première modulation dite de type A correspondant à une modulation d'amplitude ou ASK *(Amplitude Shift Keying)* de profondeur de modulation 100% et un codage Manchester et une seconde modulation dite de type B correspondant à une modulation avec non-retour à zéro ou NRZ *(Non Return to Zero)* de profondeur de modulation 10%. Ces deux types de modulation sont prévus pour des débits allant jusqu'à 846 kbit/s.

Toutefois, de nouvelles applications des systèmes RFID notamment dans le domaine de l'identification (passeport électronique par exemple) requièrent des débits supérieurs. Pour atteindre des débits plus élevés tout en respectant le masque spectral fixé par la norme, il a été proposé de recourir à une modulation de phase ou PSK (*Phase Shift Keying*) et de réduire la durée symbole. Les ordres de modulation de phase actuellement envisagés sont de 2 à 16 (2-PSK, 4-PSK, 8-PSK, 16-PSK). La durée symbole $T_s$ actuellement prévue dans le système RFID VHBR est de *2T* ou *4T* où *T* = 1 / *f* est la période de la porteuse précitée. Autrement dit, la vitesse de modulation est de 6.78 Mbaud ou 3.39 Mbaud. On comprend qu'avec une vitesse de modulation de 6.78 Mbaud et une modulation 16-PSK, on puisse désormais atteindre des débits de 27,12 Mbit/s. Un autre mode prévoit l'utilisation d'une modulation ASK (Amplitude-Shift Keying) avec une vitesse de modulation allant jusqu'à 6.78 Mbaud permettant d'atteindre un débit de 6.78 Mbit/s.

Toutefois, si les récepteurs des systèmes RFID de première génération, c'est-à-dire à bas débit, avaient une architecture particulièrement simple, ceux à très haut débit doivent faire appel à un traitement du signal relativement complexe pour combattre l'interférence inter-symbole. Cette interférence inter-symbole est due à la nature passe-bande du couplage entre le lecteur et la carte du système RFID, elle ne peut plus être négligée à haut débit.

Les techniques d'égalisation les plus simples à mettre en oeuvre opèrent sur une version échantillonnée du signal complexe (par comparaison à celles, non-linéaires, opérant sur l'information de phase échantillonnée) et font par conséquent appel à une démodulation en quadrature (encore dénommée démodulation I/Q) nécessitant généralement des mélangeurs analogiques. Or, ces mélangeurs ne sont guère compatibles avec l'architecture des récepteurs RFID dans la mesure où ces derniers sont alimentés à partir de la seule énergie de la porteuse.

L'article de R.C.H. van de Beek et al. intitulé « A 13.56 Mbps PSK receiver for 13.56 MHz RFID applications » publié dans Proc. of IEEE Radio Frequency Integrated Circuits Symposium (RFIC), pp. 239-242, 17-19 juin 2012, décrit un récepteur RFID comprenant une démodulation de phase dans le domaine analogique basée sur la mesure du temps séparant les passages à zéro du signal RF reçu des passages à zéro du signal de la porteuse récupérée. Cette architecture est complexe et le résultat de la démodulation est relativement sensible au bruit.

L'article de M. Gossar et al. intitulé « Parameter analysis and reader architectures for broadband 13.56 MHz RFID systems » publié dans Microwave Symposium Digest (MTT), IEEE MTT-S Int'l, pp. 1524-1527, 23-28 Mai 2010, décrit un récepteur RFID présentant une architecture SDR *(Software Defined Radio)* et utilisant un convertisseur analogique/numérique (ADC) en bande RF pour réaliser une démodulation en quadrature directe dans le domaine numérique. Un tel démodulateur numérique en quadrature est décrit par exemple dans le document US-A-5504455.

L'article de D. Seebacher et al. intitulé "Measurement instrument selection for very high bit rate contactless transponder évaluation" publié dans Proc. of IEEE INTERNATIONAL CONFERENCE ON RFID-TECHNOLOGIES AND APPLICATIONS, pp. 140-147, 15-16 Septembre 2011, décrit un récepteur RFID à très haut débit pour symboles PSK, ledit récepteur employant des décimateurs. Quel que soit le type de démodulation en quadrature envisagé, il est ensuite nécessaire de synchroniser le récepteur sur les symboles transmis. En effet, dans le système RFID VHBR précité les symboles sont transmis par modulation PSK sur une durée symbole $T_s$ pouvant être de *2T* ou *4T*, encore dénommée ETU *(Elementary Time Unit).* Autrement dit, le rythme baud est de $R_s$ = *f* / 4 ( *f* / 2) et l'ETU est de durée 4*T* (2*T*). On rappelle que le rythme baud est le rythme auquel sont transmis les symboles de modulation.

Si le récepteur RFID connaît le rythme baud de l'émetteur, il ne sait pas en revanche quand commence un symbole dans la séquence d'échantillons complexes issus du démodulateur.

Le but de la présente invention est par conséquent de proposer un récepteur RFID à très haut débit capable de se synchroniser de manière simple et efficace sur les symboles reçus.

**EXPOSÉ DE L'INVENTION**

La présente invention est définie par un récepteur RFID pour recevoir un signal comprenant des trames de transmission, chaque trame étant constituée de symboles PSK et commençant par une séquence de symboles pilote du type $a,a*,a*,a,a,...,$ le signal étant modulé à une fréquence porteuse $f=1/T,$ le récepteur comprenant un démodulateur numérique en quadrature pour fournir, à une fréquence d'échantillonnage, des échantillons en phase et des échantillons en quadrature à un module de synchronisation symbole, un démodulateur PSK pour démoduler des symboles PSK fournis par le module de synchronisation symbole, ledit récepteur comprenant en outre :

un premier démultiplexeur recevant une séquence formée par les échantillons en quadrature consécutifs pour fournir quatre sous-séquences entrelacées de ces échantillons;

un détecteur de signe recevant les échantillons de l'une de ces sous-séquences et fournissant un signal de signe;

un corrélateur de signe pour corréler le signal de signe ainsi obtenu avec une séquence signée de longueur prédéterminée ;

des moyens de corrélation pour corréler respectivement les différentes sous-séquences avec ladite séquence signée ;

un premier module de décision activé lorsque le résultat de corrélation du corrélateur de signe excède un seuil prédéterminé, le module de décision déterminant, lorsqu'il est activé, la sous-séquence fournissant le résultat de corrélation le plus élevé et en déduisant un instant de décimation ;

au moins un premier et un second décimateur recevant respectivement, à la fréquence d'échantillonnage, les échantillons en phase et en quadrature du démodulateur numérique en quadrature, et les décimant au dit instant de décimation pour fournir des composantes en phase et en quadrature des symboles de modulation à la cadence baud.

Le premier démultiplexeur peut être réalisé par exemple au moyen d'un convertisseur série/parallèle formant des mots de quatre échantillons successifs, une des sorties dudit convertisseur étant reliée au corrélateur de signe.

Selon un mode de réalisation avantageux, le détecteur de signe fournit une valeur égale à -1 lorsqu'un échantillon en entrée est inférieur à une valeur de seuil négative prédéterminée, une valeur égale à +1 lorsque l'échantillon en entrée est supérieur à une valeur de seuil positive prédéterminée, et une valeur nulle lorsque l'échantillon en entrée est compris entre ladite valeur de seuil négative et ladite valeur de seuil positive.

Avantageusement, le récepteur RFID génère un signal logique carré ($g^+(t)$) à la fréquence $2f$ et un second signal logique carré ($\overline{g^+}(t)$) inverse du premier, le démodulateur numérique en quadrature comprenant :

un premier intégrateur pour intégrer une première composante du signal reçu ($y(t)$, $y^+(t)$ ) lorsque le premier signal logique est dans un état haut et fournissant un premier résultat d'intégration lorsque le premier signal logique est dans un état bas ;

un second intégrateur pour intégrer ladite composante du signal reçu ($y(t)$, $y^+(t)$ ) lorsque le second signal logique est dans un état haut et fournissant un second résultat d'intégration lorsque le second signal logique est dans un état bas ;

un premier soustracteur pour soustraire le second résultat d'intégration au premier résultat d'intégration pour fournir des échantillons $z_n$ à la fréquence $4f$ ;

un premier module de combinaison pour combiner des échantillons successifs $z_n, z_{n-1}, z_{n-2}, z_{n-3}$ et fournir des échantillons $I_n = z_n - z_{n-1} - z_{n-2} + z_{n-3}$ à la fréquence $4f$ ;

un second module de combinaison pour combiner des échantillons successifs $z_n, z_{n-1}, z_{n-2}, z_{n-3}$ et fournir des échantillons $Q_n = -z_n - z_{n-1} + z_{n-2} + z_{n-3}$ à la fréquence $4f$ ;

un troisième décimateur pour décimer les échantillons $I_n$ avec un facteur de décimation 4 pour fournir des échantillons de composante en phase $I(kT)$ ;

un quatrième décimateur pour décimer les échantillons $Q_n$ avec un facteur de décimation 4 pour fournir des échantillons de composante en quadrature $Q(kT)$.

Selon une première variante, ladite première composante du signal reçu est le signal reçu lui-même.

Selon une seconde varainte, la première composante ($y^+(t)$ ) correspondant à la partie positive du signal reçu, une seconde composante ( $y^-(t)$) correspondant à la partie négative du signal reçu, le signal reçu étant une combinaison de la première composante et la seconde composante, et que le démodulateur numérique en quadrature comprend en outre :

un troisième intégrateur pour intégrer la seconde composante du signal reçu lorsque le premier signal logique est dans un état haut et fournir un troisième résultat d'intégration lorsque le premier signal logique est dans un état bas ;
un quatrième intégrateur pour intégrer la seconde composante du signal reçu lorsque le second signal logique est à l'état haut et fournir un quatrième résultat d'intégration lorsque le second signal logique est à l'état bas ;
un second soustracteur pour soustraire le quatrième résultat d'intégration au troisième résultat d'intégration, les échantillons $z_n$ étant obtenus comme combinaison des résultats des premier et second soustracteurs.

Le démodulateur numérique en quadrature peut comprendre un premier convertisseur analogique numérique pour convertir les premier et second résultats d'intégration avant la soustraction par le premier soustracteur.

Alternativement, il peut comprendre un premier convertisseur analogique/numérique pour convertir les premier et second résultats d'intégration avant la soustraction par le premier soustracteur ainsi qu'un second convertisseur analogique/numérique pour convertir les troisième et quatrième résultats d'intégration avant la soustraction par le second soustracteur.

Dans les deux cas précédents, le démodulateur numérique en quadrature peut comprend en outre un second démultiplexeur recevant les échantillons $I_n$ et les démultiplexant vers quatre sorties, un troisième démultiplexeur recevant les échantillons $Q_n$ et les démultiplexant vers quatre sorties, le démodulateur numérique en quadrature comprenant en outre un second module de décision recevant au moins un échantillon d'une sortie du démultiplexeur et au moins un échantillon d'une sortie correspondante du troisième démultiplexeur, ledit second module de décision décidant, pendant un intervalle de temps où ladite porteuse n'est pas modulée, de l'instant de décimation dans les troisième et quatrième décimateurs.

Selon un premier exemple d'implémentation, le second module de décision reçoit deux échantillons consécutifs $I_n, I_{n-1}$ de deux sorties voisines du second démultiplexeur et deux échantillons consécutifs $Q_n$, $Q_{n-1}$ de deux sorties voisines du troisième démultiplexeur, le second module de décision décidant de l'instant de décimation dans les troisième et quatrième décimateurs en comparant en valeur absolue $I_n$ et $I_{n-1}$ avec un seuil prédéterminé et si l'échantillon $I_n$, resp. $I_{n-1}$, est inférieur à ce seuil en déterminant le signe de l'échantillon $Q_n$, resp. $Q_{n-1}$ correspondant.

Selon un second exemple d'implémentation, le second module de décision reçoit deux échantillons consécutifs $I_n, I_{n-1}$ de deux sorties voisines du second démultiplexeur et deux échantillons consécutifs $Q_n$, $Q_{n-1}$ de deux sorties voisines du troisième démultiplexeur, le second module de décision décidant de l'instant de décimation en comparant en valeur absolue $Q_n$ et $Q_{n-1}$ avec un seuil prédéterminé et si l'échantillon $Q_n$, resp. $Q_{n-1}$ est inférieur à ce seuil, en déterminant le signe de l'échantillon $I_n$, resp. $I_{n-1}$ correspondant.

Enfin, les échantillons de chacune des deux sorties voisines des second et troisième démultiplexeurs peuvent faire l'objet d'un filtrage par des filtres passe-bas avant d'être fournis au second module de décision.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 représente schématiquement l'architecture générale d'un récepteur RFID VHBR selon un mode de réalisation de l'invention ;
La Fig. 2 représente schématiquement un module de synchronisation au rythme baud du récepteur de la Fig. 1 ;
La Fig. 3 représente schématiquement une première variante de démodulateur en quadrature pour le récepteur de la Fig. 1;
La Fig. 4 représente schématiquement une seconde variante de démodulateur en quadrature pour le récepteur de la Fig. 1;
La Fig. 5 représente des fonctions utiles aux démodulateurs en quadrature de la Fig. 3 ou 4 ;
La Fig. 6 représente schématiquement les différentes phases d'échantillonnage possibles des décimateurs dans les démodulateurs en quadrature de la Fig. 3 ou 4 ;
La Fig. 7 représente schématiquement un démodulateur en quadrature selon la Fig. 3 ou 4 avec synchronisation de l'échantillonnage I/Q.

## EXPOSÉ DÉTAILLÉ DE MODES DE RÉALISATION PARTICULIERS

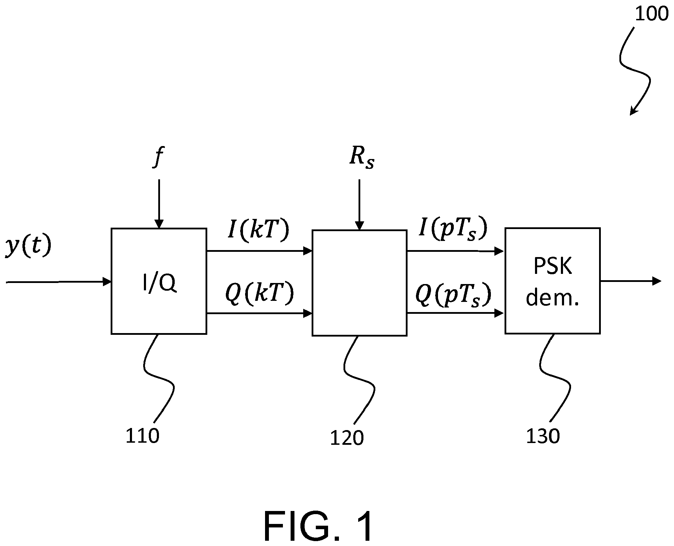

La Fig. 1 représente l'architecture générale d'un récepteur RFID VHBR selon un mode de réalisation de l'invention.

Le récepteur, 100, comprend un démodulateur numérique en quadrature, 110, suivi d'un module de synchronisation au rythme baud, 120, et d'un démodulateur PSK, 130.

Le démodulateur numérique en quadrature peut être par exemple du type décrit dans le document US-A-5504455, autrement dit comprendre un échantillonneur à la fréquence $f_e = 4\,f$ avec multiplexage des échantillons de rangs pairs et impairs sur les voies I et Q, et des décimateurs d'un facteur 4 sur chaque voie.

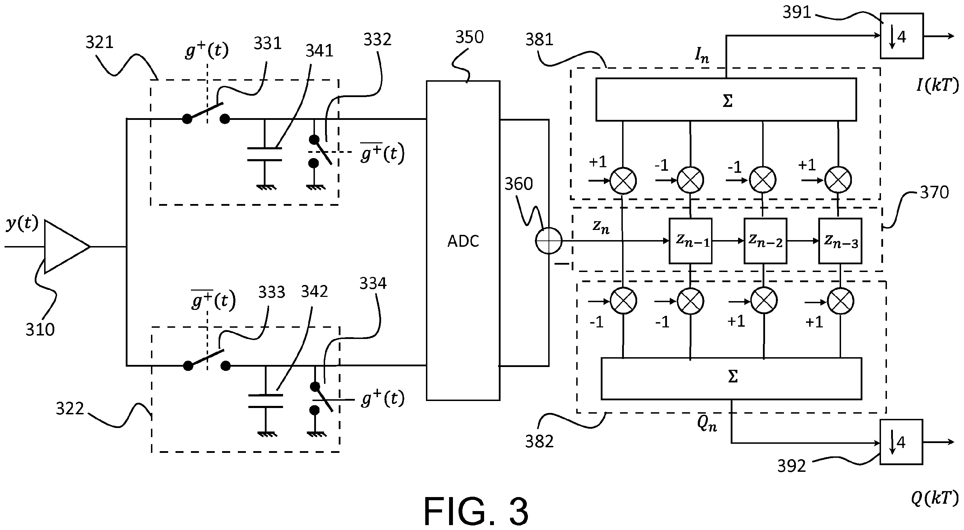

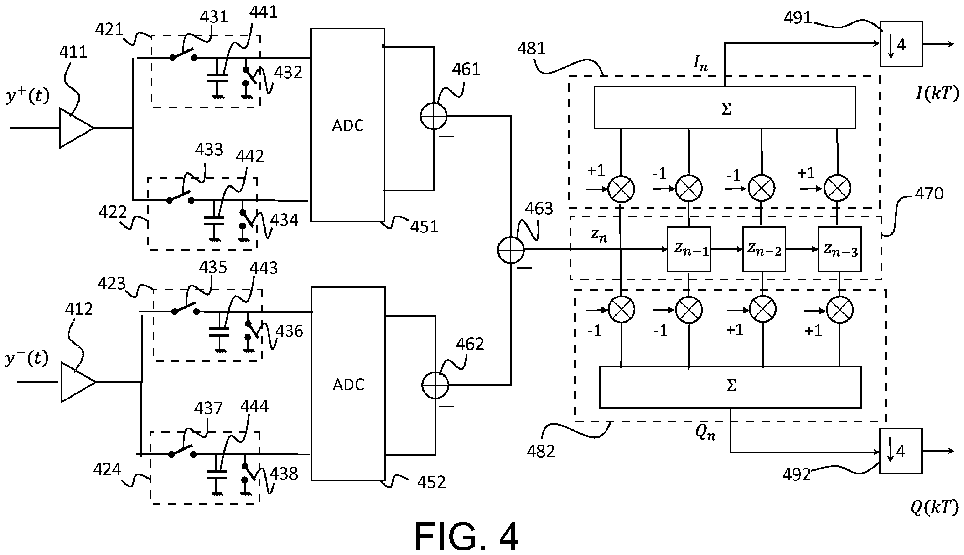

De préférence, toutefois, le démodulateur numérique en quadrature aura la structure décrite plus loin en relation avec les Figs. 3 et 4.

Le module de synchronisation symbole au rythme baud, 120, permet au récepteur d'extraire les symboles de modulation successifs de la séquence d'échantillons fournis par le démodulateur numérique en quadrature.

Le démodulateur PSK, 130, permet ensuite d'effectuer une démodulation symbole à Q-aire de manière connue en soi (où $2^Q$ est le cardinal de l'alphabet PSK).

Le module de synchronisation symbole utilise la structure particulière de la trame de transmission dans un système RFID VHBR. En effet, dans un tel système, chaque trame est précédée d'un préambule de 140 symboles. Parmi ces 140 symboles, les 44 premiers présentent des composantes Q alternées à la fréquence $R_s / 2$ où $R_s$ est le rythme baud. Plus précisément, ces 44 premiers symboles forment une suite : $a,a,a^*,a^*,a,a,a^*,a^*,...$ où $a$ et $a^*$ sont des symboles conjugués appartenant à la constellation de modulation.

On trouvera une description détaillée de la structure du préambule de la trame de transmission dans le projet de norme ISO/IEC 14443-2 :2010 intitulé « Identification cards-contactless integrated circuit cards- proximity cards, Part 2 : Radio frequency power and signal interface » disponible sur le site www.iso.org.

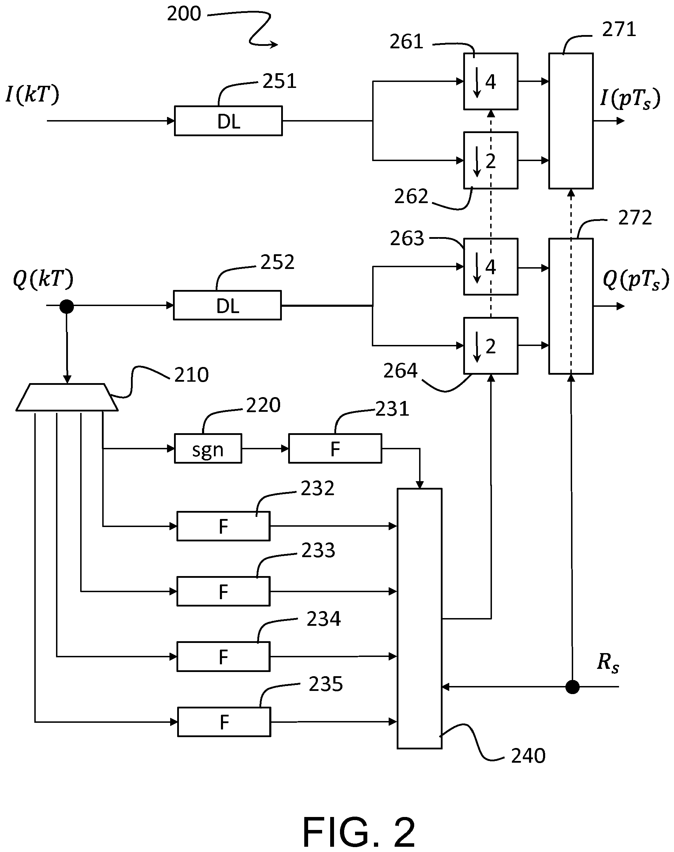

La Fig. 2 montre schématiquement un module de synchronisation symbole au rythme baud, 200.

Ce module reçoit en entrée, au rythme $f$, les échantillons $I(kT)$ et $Q(kT)$, provenant du démodulateur en quadrature.

Comme indiqué précédemment, la synchronisation baud met à profit l'alternance de signe de la composante Q pour les premiers symboles du préambule, soit +1,+1,-1, -1,+1,+1,...

La séquence des échantillons $Q(kT)$ successifs est divisée par un démultiplexeur (1 vers 4), 210, en quatre sous-séquences entrelacées formées respectivement par les échantillons d'indices tels que $k =0[4]$, $k = 1[4]$, $k = 2[4]$, $k = 3[4]$ ou [ ] désigne le modulo, chacune de ces sous-séquences étant corrélée par des moyens de corrélation 232-235 avec la suite semi-alternée +1,+1,-1,-1,+1,+1,... La sous-séquence correspondant au maximum de corrélation permet de caler la décimation des échantillons $I(kT)$ et $Q(kT)$ pour obtenir les parties réelle et imaginaire des symboles successifs.

Le démultiplexeur 210 peut être réalisé par exemple sous la forme d'un convertisseur série/ parallèle. Lorsque $R_s = f/4$, les mots en sortie du démultiplexeur représentent la durée d'un symbole et lorsque $R_s = f / 2$, les mots en sortie du démultiplexeur représentent la durée de deux symboles consécutifs.

Une des sorties quelconques du démultiplexeur (ici la première sortie) est reliée à un détecteur de signe 220. Le détecteur de signe peut être implémenté de manière classique au moyen d'une comparaison avec une valeur nulle, la sortie du détecteur de signe étant alors sous forme binaire (-1 pour un signe négatif et +1 pour un signe positif). Avantageusement, le détecteur de signe utilise un double seuil, la sortie du détecteur étant ternaire. Plus précisément la fonction $\sigma$ de détection de signe est, dans ce cas, définie par :

$$\sigma(x) = -1 \text{ si } x < -Th \qquad\qquad (1\text{-}1)$$

$$\sigma(x) = 0 \ \text{ si } -Th \leq x \leq Th \qquad\qquad (1\text{-}2)$$

$$\sigma(x) = +1 \text{ si } x > Th \qquad\qquad (1\text{-}3)$$

où $Th$ est une valeur de seuil positive qui est choisie en fonction du rapport signal sur bruit en sortie du démodulateur en quadrature.

Le signal de signe (binaire ou ternaire) ainsi obtenu est corrélé dans un filtre de corrélation 631, dit corrélateur de signe, avec la séquence semi-alternée +1,+1,-1,-1,+1,+1,... de longueur $L$ prédéterminée (en pratique on pourra choisir cette longueur égale à 32), à la fréquence $f/4$ ou $f/2$ selon le cas. Lorsque le résultat de la corrélation franchit un seuil prédéterminé (par exemple $\dfrac{L-1}{2}$), le début du préambule est détecté et le module de décision 240 est activé.

Ce module de décision reçoit des moyens de corrélation 232-235, les résultats de corrélation des sous-séquences avec la séquence semi-alternée précitée. Les moyens de corrélation peuvent être des filtres de corrélation 232, 233, 234, 235 disposés en parallèle sur les sorties du démultiplexeur. Ces filtres ont une structure identique à celle du corrélateur de signe 231. Le module de décision compare les résultats de corrélation et en déduit l'alignement des échantillons $I(kT)$ et $Q(kT)$ par rapport aux symboles (ou aux ETUs).

Les échantillons $I(kT)$ et $Q(kT)$ sont par ailleurs respectivement retardés dans les lignes à retard 251 et 252 pour compenser le temps de traitement dans le démultiplexeur, les filtres de corrélation et le module décision. Le module de décision permet de caler l'échantillonnage (à la fréquence baud) des décimateurs 261 (ou 262) sur la voie I et 263 (ou 264) sur la voie Q. Les multiplexeurs 271 et 272 permettent de choisir la sortie du décimateur en fonction du rythme baud. On notera toutefois que les multiplexeurs 271 et 272 sont optionnels, la sélection du taux de décimation en fonction du rythme baud pouvant être simplement réalisée en bloquant le signal d'horloge du décimateur non sélectionné.

L'homme du métier comprendra que le démultiplexeur, les moyens de corrélation et le module de décision pourront être implémentés selon différentes variantes sans pour autant sortir du cadre de la présente invention. En particulier, certains calculs effectués en parallèle par une pluralité de filtres de corrélation pourront être réalisés en série au sein d'un seul filtre de corrélation opérant à plus haute fréquence, le choix de l'implémentation dépendant d'un compromis entre la surface de silicium du circuit et sa rapidité de fonctionnement.

Les échantillons en sortie sont les composantes $I(pT_s)$ et $Q(pT_s)$ des symboles successifs, $p$ représentant l'indice des symboles en question.

Les symboles ainsi obtenus sont ensuite fournis au démodulateur PSK.

On décrira ci-après un mode de réalisation avantageux du démodulateur numérique en quadrature.

On rappelle tout d'abord le principe d'une démodulation en bande de base par des fonctions sinusoïdales. Si l'on note $y(t)$ le signal à démoduler, le démodulateur en bande de base classique effectue une multiplication par des fonctions sinusoïdales en quadrature à la fréquence $f$ de la porteuse, puis un échantillonnage des voies I et Q à la même fréquence. Autrement dit, un tel démodulateur classique fournit des échantillons en bande de base définis par :

$$I(kT) = \int_{kT}^{(k+1)T} y(t)\cos\left(2\pi ft\right)dt \qquad (2\text{-}1)$$

$$Q(kT) = \int_{kT}^{(k+1)T} y(t)\sin\left(2\pi ft\right)dt \qquad (2\text{-}2)$$

où $T = 1/f$. Le signal à démoduler s'exprime sous la forme suivante :

$$y(t) = A(t)\cos\left(2\pi ft + P(t)\right) \qquad (3)$$

où $A(t)$ est un signal modulant l'amplitude et $P(t)$ un signal modulant la phase. La modulation étant très lente par rapport à la période de la porteuse, $A(t)$ et $P(t)$ peuvent être considérés comme constant sur une durée $T$. Les échantillons sur les voies I et Q ont alors la forme simplifiée suivante :

$$I(kT) = A(kT)\cos\left(P\left(kT\right)\right) \qquad (4\text{-}1)$$

$$Q(kT) = A(kT)\sin\left(P\left(kT\right)\right) \qquad (4\text{-}2)$$

Le démodulateur numérique en quadrature proposé ici utilise une base de démodulation formée par deux fonctions créneau en quadrature, $g_c(t)$ et $g_s(t)$, de période $T$, approximant respectivement les fonctions $cos(2\pi ft)$ et $sin(2\pi ft)$. Plus précisément :

$$g_c(t) = \Pi\left(\frac{t}{T/2}\right) \otimes \sum_k (-1)^k \delta(t - kT/2) \qquad (5\text{-}1)$$

$$g_s(t) = g_c\left(t - T/4\right) \qquad (5\text{-}2)$$

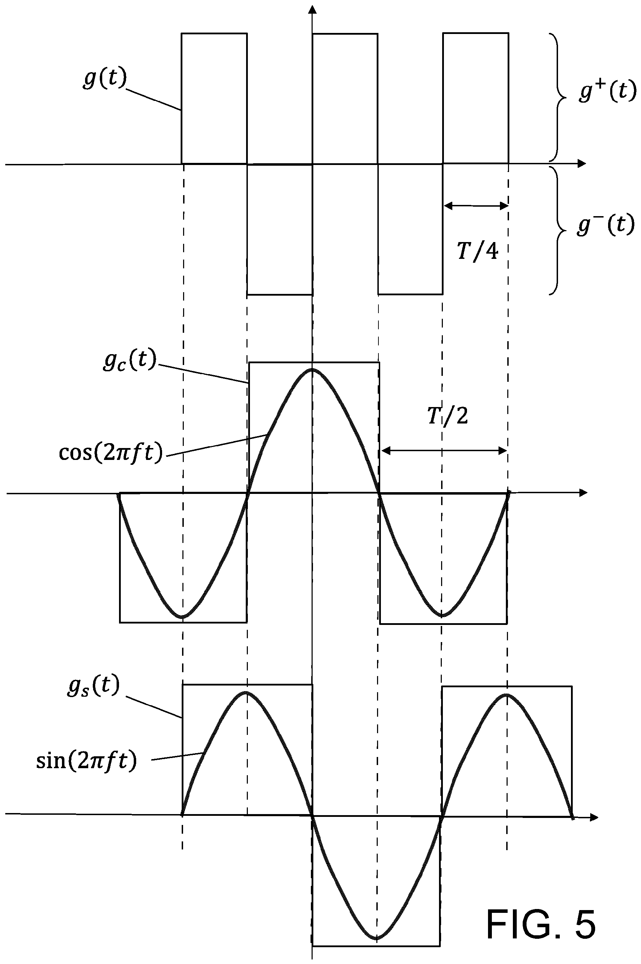

où $\Pi\left(\dfrac{t}{T/2}\right)$ est la fonction porte de largeur $T/2$, centrée sur 0, prenant la valeur 1 dans cet intervalle et la valeur nulle partout ailleurs et $\sum_{k}(-1)^{k}\delta(t-kT/2)$ est la fonction peigne alternée de période $T$, $\delta(.)$ étant la distribution de Dirac. Les fonctions $g_c(t)$ et $g_s(t)$ ainsi que les fonctions $cos(2\pi ft)$ et $sin(2\pi ft)$ sont représentées en Fig. 5.

La décomposition selon cette base donne :

$$I(kT) = \int_{kT}^{(k+1)T} y(t)g_c(t)dt \qquad (6\text{-}1)$$

$$Q(kT) = \int_{kT}^{(k+1)T} y(t)g_s(t)dt \qquad (6\text{-}2)$$

Les fonctions $g_c(t)$ et $g_s(t)$ peuvent être décomposées en séries de Fourier, par exemple :

$$g_s(t) = \sum_{p=1}^{\infty}\frac{1}{2p-1}\sin\big(2\pi f\left(2p-1\right)t\big) \qquad (7)$$

Il en résulte que :

$$Q(kT) = \int_{kT}^{(k+1)T} y(t)\sum_{p=1}^{\infty}\frac{1}{2p-1}\sin\big(2\pi f\left(2p-1\right)t\big)dt \qquad (8)$$

soit, avec la même hypothèse de faible variation de modulation A(t) et $P(t)$ sur un temps symbole :

$$Q(kT) = \frac{1}{2}A(kT)\sin\big(P(kT)\big) +$$
$$\sum_{p=2}^{\infty}\frac{1}{2p-1}\int_{kT}^{(k+1)T}\frac{1}{2}\big(A(t)\sin(4p\pi ft+P(t)) + \sin(4(p-1)\pi ft-P(t))\big)dt$$

$$(9)$$

Le premier terme de l'expression (9) correspond à la fréquence fondamentale $f=1/T$ du signal carré et les termes suivants aux harmoniques de fréquences $pf$. Sous la même hypothèse de faible vitesse de modulation que précédemment, tous ces termes représentent des intégrales de fonctions sinusoïdales de fréquences $pf$ sur une période $T$ et sont donc nuls.

Un calcul similaire peut être effectué pour $g_c(t)$. Il en résulte en définitive que :

$$I(kT) = \frac{1}{2}A(kT)\cos\big(P(kT)\big) \qquad (10\text{-}1)$$

$$Q(kT) = \frac{1}{2} A(kT) \sin\big(P(kT)\big) \qquad\qquad (10\text{-}2)$$

Les deux fonctions $g_c(t)$ et $g_s(t)$ peuvent être générées à partir d'une fonction créneau $g(t)$ de période $T/2$ définie par :

$$g(t) = \Pi\left(\frac{t - T/8}{T/4}\right) \otimes \sum_k (-1)^k \delta(t - kT/4) \qquad\qquad (11)$$

où $\Pi\left(\dfrac{t}{T/4}\right)$ est la fonction porte prenant la valeur 1 sur le support $\left[0, \dfrac{T}{4}\right]$ et nulle partout ailleurs et

$\sum\limits_k (-1)^k \delta(t - kT/4)$ est la fonction peigne alternée de période $T/2$. La fonction $g(t)$ est également représentée en Fig. 5.

La fonction $g_c(t)$ peut être obtenue de la manière suivante :

$$g_c(t) = +g(t) \text{ pour } t \in \left[kT, kT + T/4\right[$$

$$g_c(t) = -g(t) \text{ pour } t \in \left[kT + T/4, kT + T/2\right[$$

$$g_c(t) = -g(t) \text{ pour } t \in \left[kT + T/2, kT + 3T/4\right[$$

$$g_c(t) = +g(t) \text{ pour } t \in \left[kT + 3T/4, (k+1)T\right[ \qquad\qquad (12)$$

De même, la fonction $g_s(t)$ peut être obtenue de manière similaire par:

$$g_s(t) = -g(t) \text{ pour } t \in \left[kT, kT + T/4\right[$$

$$g_s(t) = -g(t) \text{ pour } t \in \left[kT + T/4, kT + T/2\right[$$

$$g_s(t) = +g(t) \text{ pour } t \in \left[kT + T/2, kT + 3T/4\right[$$

$$g_s(t) = +g(t) \text{ pour } t \in \left[kT + 3T/4, (k+1)T\right[ \qquad\qquad (13)$$

Si l'on note $g^+(t) = \Pi\left(\dfrac{t - T/8}{T/4}\right) \otimes \sum\limits_k \delta(t - kT/2)$ le signal logique correspondant à la partie positive

de $g(t)$ et $g^-(t) = \Pi\left(\dfrac{t + T/8}{T/4}\right) \otimes \sum\limits_k \delta(t - kT/2)$ le signal logique correspondant à la partie négative de $g(t)$,

on a :

$$g(t) = g^+(t) - g^-(t) = g^+(t) - \overline{g}^+(t) \qquad\qquad (14)$$

où $\overline{g}^+(t)$ désigne l'inverse logique de $g^+(t)$.

Le produit $w(t) = y(t)g(t) = y(t)g^+(t) - y(t)\overline{g}^+(t)$ peut ainsi être obtenu à partir de simples opérations de commutation (par des signaux logiques) et de soustraction. Les échantillons sur les voies I et Q s'en déduisent ensuite par :

$$I\left(kT\right) = \int_{kT}^{kT+T/4} w(t)dt - \int_{kT+T/4}^{kT+T/2} w(t)dt - \int_{kT+T/2}^{kT+3T/4} w(t)dt + \int_{kT+3T/4}^{(k+1)T} w(t)dt$$

$$(15\text{-}1)$$

$$Q(kT) = -\int_{kT}^{kT+T/4} w(t)dt - \int_{kT+T/4}^{kT+T/2} w(t)dt + \int_{kT+T/2}^{kT+3T/4} w(t)dt + \int_{kT+3T/4}^{(k+1)T} w(t)dt$$

$$(15\text{-}2)$$

Les équations (15-1) et (15-2) montrent que les échantillons en phase et en quadrature peuvent s'obtenir simplement à partir de résultats d'intégration du produit $w(t)$ sur quatre quarts de période consécutifs.

De manière plus générale, les échantillons en phase et en quadrature peuvent s'obtenir à partir de résultats d'intégration d'un signal $w_a(t) = g_a(t)y(t)$ où $g_a(t)$ est une fonction créneau de période $T_a = \dfrac{T}{2a}$ où $a$ est un nombre entier non nul, l'intégration étant réalisée sur $4a$ fenêtres temporelles successives de largeur $\dfrac{T}{4a}$. Toutefois, on peut montrer que l'on peut toujours se ramener au cas $a = 1$ en groupant ces résultats d'intégration par groupes de $a$ termes successifs, seul important en fait la granularité de la division temporelle en fenêtres de la largeur $T/4$. Aussi, supposerons nous dans la suite, sans préjudice de généralisation, que $a = 1$.

La Fig. 3 représente une première variante de démodulateur numérique en quadrature pouvant être utilisée dans le récepteur de la Fig. 1.

Le signal RF reçu $y(t)$ est amplifié par un amplificateur 310 puis intégré par un premier intégrateur 321 et un second intégrateur 322 disposés en parallèle. Par exemple, le signal $y(t)$ pourra être un signal de tension et l'amplificateur 310 un amplificateur à transconductance pour convertir ce signal de tension en un signal de courant, intégré en parallèle par les intégrateurs 321 et 322.

Le premier intégrateur comprend un premier commutateur 331 contrôlé par le signal logique $g^+(t)$ et un second commutateur 332 contrôlé par le signal logique inverse $\bar{g}^+(t)$. Lorsque le premier commutateur 331 est fermé, le second commutateur 332 est ouvert et le signal $y(t)$ est intégré dans la capacité 341. Inversement, lorsque le premier commutateur est ouvert, le résultat d'intégration est lu puis le second commutateur est fermé pour décharger la capacité 341 (on comprendra qu'en toute rigueur le signal de contrôle du second commutateur aura un niveau haut pendant une fraction de $\bar{g}^+$(t) de manière à permettre une lecture avant la remise à zéro).

De manière similaire, le second intégrateur comprend un troisième commutateur 333 contrôlé par le signal logique $\bar{g}^+$(t) et un quatrième commutateur 334 contrôlé par le signal logique $g^+(t)$. Lorsque le troisième commutateur 333 est fermé, le quatrième commutateur 334 est ouvert et le signal $y(t)$ est intégré dans la capacité 342. Lorsque le troisième commutateur 333 est ouvert, le signal intégré est lu puis le quatrième commutateur est fermé pour décharger la capacité 342.

On comprend que les intégrateurs 321 et 322 opèrent en alternance : lorsque le premier intègre le signal reçu, le résultat d'intégration du second est lu puis remis à zéro et, à l'inverse, lorsque le second intègre le signal reçu, le résultat d'intégration du premier est lu puis remis à zéro.

Par lecture du premier ou du résultat d'intégration on entend ici la conversion de ces résultats par un convertisseur analogique/numérique 350 opérant à la fréquence 4$f$ (ou alternativement par deux convertisseurs analogique/numérique opérant sur chacune des voies).

Le résultat d'intégration du second intégrateur est soustrait au résultat d'intégration du premier intégrateur dans un premier sommateur 360 (le signe d'une entrée du sommateur étant inversé). Ainsi, à un instant d'échantillonnage $t_n = n\dfrac{T}{4}$, la valeur en sortie du soustracteur est égale à :

$$z_n = \int\limits_{(n-1)\frac{T}{4}}^{n\frac{T}{4}} w(t)dt \qquad\qquad (16)$$

Les valeurs $z_n$ successives sont stockées dans une mémoire tampon (registre FIFO), 370. Plus précisément, à l'instant $t_n$ le registre FIFO contient les valeurs précédentes $z_{n-1}$, $z_{n-2}$, $z_{n-3}$. Un premier module de combinaison 381 effectue la combinaison :

$$I_n = z_n - z_{n-1} - z_{n-2} + z_{n-3} \qquad\qquad (17\text{-}1)$$

et un second module de combinaison 382 effectue la combinaison :

$$Q_n = -z_n - z_{n-1} + z_{n-2} + z_{n-3} \qquad\qquad (17\text{-}2)$$

Les sorties des premier et second modules de combinaison sont décimées d'un facteur 4 respectivement dans les décimateurs 391 et 392 pour donner :

$$I(kT) = I_{4n} \qquad\qquad (18\text{-}1)$$

$$Q(kT) = Q_{4n} \qquad\qquad (18\text{-}2)$$

On comprend que le démodulateur numérique en quadrature décrit ci-dessus permet d'obtenir les échantillons de voies I et Qde manière simple et robuste, sans recourir à des mélangeurs analogiques. En outre, le signal reçu est constamment intégré, en alternance par le premier intégrateur et par le second intégrateur, de sorte que le résultat d'échantillonnage est peu sensible au bruit.
La Fig. 4 représente une seconde variante de démodulateur numérique en quadrature pouvant être utilisée dans le récepteur de la Fig. 1.
A la différence de la première variante, on suppose que le signal d'entrée est obtenu sous forme redressée. Plus précisément, celui se présente sous la forme d'une composante positive, notée $y^+(t)$, et d'une composante négative, notée $y^-(t)$, telles que :

$$y(t) = y^+(t) - y^-(t) \qquad\qquad (19)$$

Le produit $w(t)$ peut alors s'écrire sous la forme suivante :

$$w(t) = y^+(t)g^+(t) - y^+(t)\overline{g}^+(t) - y^-(t)g^+(t) + y^-(t)\overline{g}^+(t) \qquad\qquad (20)$$

La composante positive du signal reçu, $y^+(t)$, est amplifiée par un amplificateur 411 et intégrée dans un premier intégrateur 421 ainsi que dans un second intégrateur 422, disposés en parallèle. Comme précédemment, l'amplificateur 411 peut être un amplificateur à transconductance.
Le premier intégrateur 421 comprend un premier commutateur 431 contrôlé par le signal logique $g^+(t)$ et un second commutateur 432 contrôlé par le signal logique inverse $\overline{g}^+(t)$. Lorsque le premier commutateur 431 est fermé, le second commutateur 432 est ouvert et la composante positive $y^+(t)$ est intégrée dans la capacité 441. Inversement, lorsque le premier commutateur 431 est ouvert le résultat d'intégration est lu puis le second commutateur 432 est fermé pour décharger la capacité 441.
Le second intégrateur 422 comprend un troisième commutateur 433 contrôlé par le signal logique $\overline{g}^+(t)$ et un quatrième commutateur 434 contrôlé par le signal logique inverse $\overline{g}^+(t)$. Lorsque le troisième commutateur 433 est fermé, le quatrième commutateur 434 est ouvert et la composante positive $y^+(t)$ est intégrée dans la capacité 442. Inversement, lorsque le troisième commutateur 433 est ouvert le résultat d'intégration est lu puis le quatrième commutateur 434 est fermé pour décharger la capacité 442.

On comprend ainsi que les premier et second intégrateurs fournissent respectivement les résultats d'intégration de $y^+(t)g^+(t)$ et $y^+(t)g^+(t)$ sur une durée $\dfrac{T}{4}$. Après conversion par le convertisseur 451, le résultat d'intégration en sortie du second intégrateur est soustrait au résultat d'intégration en sortie du premier intégrateur au moyen d'un premier sommateur 461.

De la même façon, la composante négative, $y^-(t)$, est amplifiée par un amplificateur 412 et intégrée dans un troisième intégrateur 423 ainsi que dans un quatrième intégrateur 424, disposés en parallèle. L'amplificateur 412 peut être un amplificateur à transconductance.

Le troisième intégrateur 423 comprend un cinquième commutateur 435 contrôlé par le signal logique $g^+(t)$ et un sixième commutateur 436 contrôlé par le signal logique inverse $\overline{g}^+(t)$. Lorsque le cinquième commutateur 435 est fermé, le sixième commutateur 436 est ouvert et la composante négative $y^-(t)$ est intégrée dans la capacité 443. Inversement, lorsque le cinquième commutateur 435 est ouvert le résultat d'intégration est lu puis le sixième commutateur 436 est fermé pour décharger la capacité 443.

Le quatrième intégrateur 424 comprend un septième commutateur 437 contrôlé par le signal logique $\overline{g}^+(t)$ et un huitième commutateur 438 contrôlé par le signal logique inverse $\overline{g}^+(t)$. Lorsque le septième commutateur 437 est fermé, le huitième commutateur 438 est ouvert et la composante négative $y^-(t)$ est intégrée dans la capacité 444. Inversement, lorsque le septième commutateur 437 est ouvert le résultat d'intégration est lu puis le huitième commutateur 438 est fermé pour décharger la capacité 444.

On comprend ainsi que les troisième et quatrième intégrateurs fournissent respectivement les résultats d'intégration de $y^-(t)g^+(t)$ et $y^-(t)g^+(t)$ sur une durée $\dfrac{T}{4}$. Après conversion par le convertisseur analogique numérique 452, le résultat d'intégration en sortie du quatrième intégrateur est soustrait au résultat d'intégration en sortie du troisième intégrateur au moyen d'un second sommateur 462.

Le résultat en sortie du second sommateur 462 est ensuite soustrait du résultat en sortie du premier sommateur 461 au moyen d'un troisième sommateur 463. On comprendra que les premier, second et troisième sommateurs pourront être remplacés par un sommateur unique effectuant la combinaison des résultats d'intégration sur la base de l'expression (19). De même, on a représenté en 451 et 452 deux convertisseurs ADC pour chacune des composantes, positive et négative. On comprendra toutefois que l'on pourra prévoir une architecture à quatre convertisseurs ADC à fréquence moitié ou un seul convertisseur à fréquence double. De manière générale, le degré de mutualisation des différents composants du démodulateur résultera d'un compromis entre leur nombre et leur fréquence de travail, de manière connue en soi.

En tout état de cause, les résultats de la sommation, notés $z_n$ comme précédemment, sont stockés dans une mémoire tampon (par exemple registre FIFO) 470. A l'instant $t_n$, le registre FIFO contient les valeurs précédentes $z_{n-1}, z_{n-2}, z_{n-3}$. Comme dans la première variante, un premier module de combinaison 481 effectue la combinaison :

$$I_n = z_n - z_{n-1} - z_{n-2} + z_{n-3} \qquad (21\text{-}1)$$

et un second module de combinaison 482 effectue la combinaison :

$$Q_n = -z_n - z_{n-1} + z_{n-2} + z_{n-3} \qquad (21\text{-}2)$$

Les sorties des premier et second modules de combinaison sont décimées d'un facteur 4 respectivement dans les décimateurs 491 et 492 pour donner :

$$I(kT) = I_{4n} \qquad (22\text{-}1)$$

$$Q(kT) = Q_{4n} \qquad (22\text{-}2)$$

On comprend que cette seconde variante permet, comme la première, d'effectuer une démodulation en quadrature sans avoir à recourir à des mélangeurs analogiques.

Dans la première comme la seconde variante, il importe de connaître l'instant de ré-échantillonnage (ou instant de décimation) dans les décimateurs 391,392 et 491,492. On comprend en effet qu'il existe quatre possibilités de décimation des échantillons $I_n, Q_n$. Le récepteur n'a pas connaissance de la manière dont il doit caler la décimation dans la série d'échantillons. Exprimé de manière équivalente, le récepteur n'a pas connaissance de la phase d'échantillonnage (phase de la porteuse à l'instant du ré-échantillonnage), dénommée ci-après phase d'échantillonnage IQ.

Pour caler correctement la phase d'échantillonnage IQ, on met avantageusement à profit le format particulier de la transmission VHBR, à savoir le fait que chaque trame est précédée d'un intervalle pendant lequel la porteuse n'est pas modulée. Cet intervalle de temps est prévu pour permettre au récepteur de récupérer de l'énergie avant de commencer la démodulation.

Si le récepteur est équipé d'une PLL, on suppose que pendant cet intervalle de temps, la boucle à verrouillage de phase (PLL) du récepteur a le temps de se verrouiller en fréquence sur la porteuse reçue. Alternativement, le récepteur peut être équipé d'une référence accordée (quartz) à la fréquence de la porteuse.

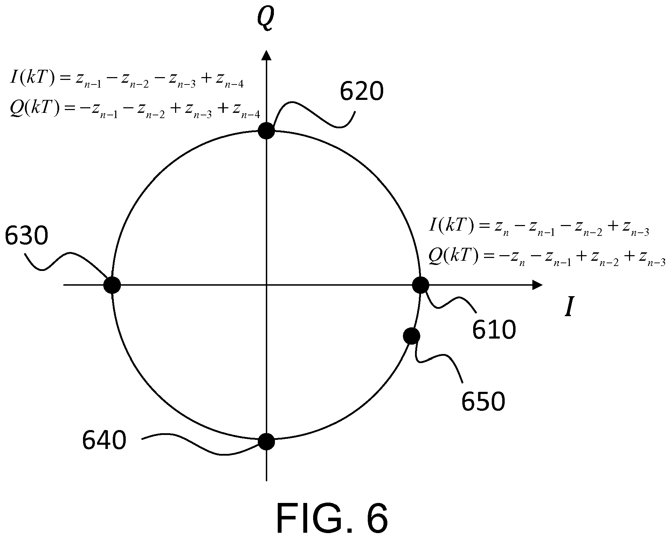

On a représenté en Fig. 6, sur le cercle unité, les quatre phases d'échantillonnage IQ possibles.

Dans la position 610, la phase d'échantillonnage IQ est nulle, autrement dit l'échantillonnage est calé correctement par rapport à la porteuse. Toute la puissance du signal démodulé est donc sur la voie I avec $I(kT) > 0$ et la puissance sur la voie Q est quasi-nulle, autrement dit $Q(kT) = 0$.

Dans la position 620, la phase d'échantillonnage IQ est de $\dfrac{\pi}{2}$, c'est-à-dire que l'instant de ré-échantillonnage est en avance de $\dfrac{T}{4}$ par rapport à ce qu'il devrait être (décalage d'un échantillon dans le buffer). Toute la puissance du signal démodulé est sur la voie Q avec $Q(kT) > 0$ et la puissance sur la voie I est quasi-nulle, autrement dit $I(kT) = 0$ .

Dans la position 630, la phase d'échantillonnage IQ est de $\pi$, c'est-à-dire que l'instant de ré-échantillonnage est décalé de $\dfrac{T}{2}$ par rapport à ce qu'il devrait être (décalage de 2 échantillons dans le buffer). Toute la puissance du signal démodulé est sur la voie I avec $I(kT) < 0$ et la puissance sur la voie Q est quasi-nulle, autrement dit $Q(kT) = 0$.

Enfin, dans la position 640, la phase d'échantillonnage IQ est de $-\dfrac{\pi}{2}$, c'est-à-dire que l'instant de ré-échantillonnage est en retard de $\dfrac{T}{4}$ par rapport à ce qu'il devrait être (décalage de 3 échantillons dans le buffer).

Si la phase d'échantillonnage IQ n'est pas dans l'une de ces quatre positions, par exemple si elle est située en position 650, cela signifie que l'horloge (fournie par la boucle PLL ou par la référence de fréquence) est mal accordée en phase et/ou en fréquence. La phase de l'horloge $g^+(t)$ (et $\overline{g}^+(t)$ ) peut être corrigée pour que la phase d'échantillonnage soit dans l'une des quatre positions précédentes.

Le calage de l'échantillonnage IQ est réalisé en calculant les puissances reçues sur les voies I et Q pour une ou plusieurs phases d'échantillonnage.

Si le calcul est effectué pour une seule phase à la fois, on balaie successivement les phases d'échantillonnage IQ jusqu'à ce que l'on trouve la phase d'échantillonnage IQ qui donne $I(kT) > 0$ et $Q(kT) =0$. En pratique, il suffit de tester en parallèle deux phases voisines et d'identifier celle pour laquelle $Q(kT) =0$. *Si* $I(kT) > 0$, la phase d'échantillonnage IQ est nulle et donc le calage des décimateurs est correct. En revanche, si $I(kT) < 0$, la phase d'échantillonnage IQ est de $\pi$ et il suffit de décaler l'échantillonnage des décimateurs de deux échantillons.

Pour obtenir un calage d'échantillonnage plus rapide, on pourra calculer les puissances sur les voies I et Q pour au moins deux phases d'échantillonnage. On testera avantageusement deux phases d'échantillonnage voisines en parallèle. On déterminera ainsi directement quelle est celle pour laquelle $Q(kT) = 0$ et à partir du signe des échantillons $I(kT)$ obtenus pour cette phase, on décide si le décimateur est bien synchronisé ($I(kT)>0$) ou s'il faut décaler la décimation de deux échantillons ($I(kT)<0$ ).

En pratique, la décision n'est pas prise sur un seul échantillon par phase d'échantillonnage IQ ainsi testée mais sur une moyenne de tels échantillons par phase d'échantillonnage IQ, de manière à éliminer le bruit. Cette moyenne peut être calculée par accumulation sur un nombre prédéterminé d'échantillons ou bien par un filtrage passe-bas (par exemple un filtrage passe-bas récursif) de manière connue en soi.

Le cas échéant, la valeur de la moyenne calculée peut également être utilisée pour faciliter la synchronisation de l'horloge de la PLL, lorsque celle-ci est présente, par rapport à la porteuse (par exemple la phase d'échantillonnage IQ en 650 donne une indication de décalage de l'horloge par rapport à la porteuse).

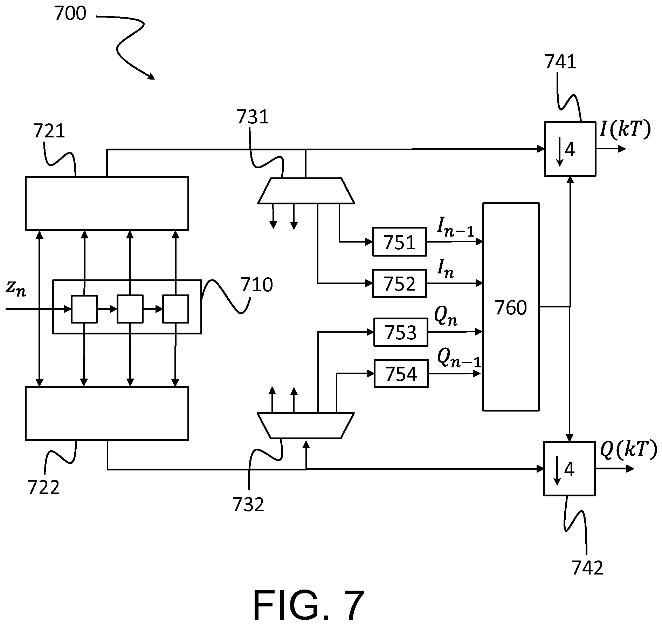

La Fig. 7 représente schématiquement un démodulateur en quadrature, 700, avec synchronisation de l'échantillonnage des voies I et Q (encore dénommée synchronisation IQ).

On a désigné par 710 le registre FIFO contenant les échantillons $z_n$ ainsi que par 721 et 722 les modules de combinaison relatifs aux voies I et Q. On comprendra que le registre FIFO 710 correspond au tampon mémoire 370 de la Fig. 3 ou au tampon mémoire 470 de la Fig.4. Les modules de combinaison 721 et 722 correspondent aux modules de combinaison 381 et 382 de la Fig. 3 ou aux modules de combinaison 481 et 482 de la Fig. 4. Enfin, les décimateurs 741 et 742 représentent les décimateurs 391 et 392 de la Fig. 3 ou les décimateurs 491 et 492 de la Fig. 4.

Les échantillons $I_n$ en sortie du module de combinaison 721 sont transmis d'une part à un second démultiplexeur (1 vers 4) à quatre sorties, 731, et d'autre part à un décimateur, 741, de facteur de décimation 4. Le second démultiplexeur 731 peut être réalisé par exemple au moyen d'un convertisseur série/ parallèle formant des mots de quatre échantillons successifs.

Dans l'exemple illustré, deux sorties du démultiplexeur sont respectivement reliées à des accumulateurs 751 et 752 effectuant une moyenne glissante sur un nombre prédéterminé d'échantillons. Ce nombre est choisi pour que la durée d'accumulation soit inférieure à la durée de l'intervalle précédant la trame de transmission. Ainsi, le signal reçu est bien une porteuse non modulée pendant le temps d'accumulation. Les deux sorties sont ici choisies contiguës, autrement dit les phases d'échantillonnage IQ testées sont voisines (en quadrature). Les moyennes issues des accumulateurs pour ces deux phases d'échantillonnage IQ sont fournies à un second module de décision 760.

De manière similaire, les échantillons $Q_n$ en sortie du module de combinaison 722 sont transmis d'une part à un troisième démultiplexeur à quatre sorties, 732, et d'autre part à un décimateur, 742, de facteur de décimation 4. Là encore, le troisième démultiplexeur 732 peut être réalisé par exemple au moyen d'un convertisseur série/ parallèle formant des mots de quatre échantillons successifs.

Comme pour la voie I, deux prises de sortie du troisième démultiplexeur sont respectivement reliées à des accumulateurs 753 et 754, ces accumulateurs effectuant une moyenne glissante sur ledit nombre prédéterminé d'échantillons. Les deux sorties du démultiplexeur 732 sont les mêmes que celles du démultiplexeur 731. Les moyennes issues de ces deux accumulateurs sont également fournies au second module de décision 760.

Ainsi, le second module de décision dispose des échantillons $I_n,Q_n$ et $I_{n-1},Q_{n-1}$. Le second module de décision détermine lequel de $Q_n$ et $Q_{n-1}$ est inférieur en valeur absolue à un seuil, puis pour celui-ci le signe de l'échantillon en quadrature correspondant $\mathrm{sgn}(I_n)$ ou $\mathrm{sgn}(I_{n-1})$. A partir de ces informations, le second module de décision 760 détermine l'instant de décimation correspondant à la phase d'échantillonnage nulle.

Le second module de décision 760 contrôle l'instant de l'échantillonnage IQ (instant de décimation) dans les décimateurs 741 et 742. Les échantillons obtenus par décimation correspondent alors à la phase d'échantillonnage IQ nulle.

Après synchronisation de l'échantillonnage IQ, les échantillons $Q(kT)$ de la voie en quadrature sont de puissance quasi-nulle pendant l'intervalle précédant la trame de transmission. En revanche, pendant la trame de transmission, la porteuse est modulée, et les échantillons de la voie en quadrature portent bien entendu une information de phase des symboles transmis.

Les échantillons en quadrature $I(kT)$ et $Q(kT)$ sont ensuite fournis au module de synchronisation symbole, 120, et démodulés par le démodulateur PSK, 130, comme décrit précédemment.

L'homme du métier comprendra que les deuxième et troisièmes démultiplexeurs, les accumulateurs ainsi que le second module de décision pourront être implémentés selon différentes variantes sans pour autant sortir du cadre de la présente invention. En particulier, certains calculs effectués en parallèle par les accumulateurs pourront être réalisés en série au sein d'un seul accumulateur opérant à plus haute fréquence.

## Revendications

**1.** Récepteur RFID pour recevoir un signal comprenant des trames de transmission, chaque trame étant constituée de symboles PSK et commençant par une séquence de symboles pilote du type $a,a,a^*,a^*,a,a,...,$ le signal étant modulé à une fréquence porteuse $f=1/T$, le récepteur comprenant un démodulateur numérique en quadrature (110) pour fournir, à une fréquence d'échantillonnage $f_e=4f$, des échantillons en phase et des échantillons en quadrature à un module de synchronisation symbole (120), un démodulateur PSK (130) pour démoduler des symboles PSK fournis par le module de synchronisation symbole, ledit récepteur comprenant:

un premier démultiplexeur (210) recevant une séquence formée par les échantillons en quadrature consécutifs pour fournir quatre sous-séquences entrelacées de ces échantillons, chaque sous-séquence étant constituée d'un échantillon sur quatre de ladite séquence d'échantillons ;
un détecteur de signe (220) recevant les échantillons de l'une de ces sous-séquences et fournissant un signal de signe;

un corrélateur de signe (231) pour corréler le signal de signe ainsi obtenu avec une séquence signée de longueur prédéterminée ;

des moyens de corrélation (232-235) pour corréler respectivement les différentes sous-séquences avec ladite séquence signée ;

un premier module de décision (240) activé lorsque le résultat de corrélation du corrélateur de signe excède un seuil prédéterminé, le module de décision déterminant, lorsqu'il est activé, la sous-séquence fournissant le résultat de corrélation le plus élevé et en déduisant un instant de décimation ;

au moins un premier et un second décimateur (261, 262, 263, 264) recevant respectivement, à la fréquence d'échantillonnage, les échantillons en phase et en quadrature du démodulateur numérique en quadrature, et les décimant au dit instant de décimation pour fournir des composantes en phase et en quadrature des symboles de modulation à la cadence baud.

2. Récepteur RFID selon la revendication 1, **caractérisé en ce que** le premier démultiplexeur est réalisé au moyen d'un convertisseur série/parallèle formant des mots de quatre échantillons successifs, une des sorties dudit convertisseur étant reliée au corrélateur de signe.

3. Récepteur RFID selon la revendication 1 ou 2, **caractérisée en ce que** le détecteur de signe fournit une valeur égale à -1 lorsqu'un échantillon en entrée est inférieur à une valeur de seuil négative prédéterminée, une valeur égale à +1 lorsque l'échantillon en entrée est supérieur à une valeur de seuil positive prédéterminée, et une valeur nulle lorsque l'échantillon en entrée est compris entre ladite valeur de seuil négative et ladite valeur de seuil positive.

4. Récepteur RFID selon l'une des revendications précédentes, **caractérisé en ce qu'**il génère un signal logique carré ($g^+(t)$) à la fréquence $2f$ et un second signal logique carré ($\overline{g}^+(t)$) inverse du premier, le démodulateur numérique en quadrature (110) comprenant :

un premier intégrateur (321) pour intégrer une première composante du signal reçu ($y(t)$, $y^+(t)$) lorsque le premier signal logique est dans un état haut et fournissant un premier résultat d'intégration lorsque le premier signal logique est dans un état bas ;

un second intégrateur (322) pour intégrer ladite composante du signal reçu ($y(t)$, $y^+(t)$) lorsque le second signal logique est dans un état haut et fournissant un second résultat d'intégration lorsque le second signal logique est dans un état bas ;

un premier soustracteur (360,461) pour soustraire le second résultat d'intégration au premier résultat d'intégration pour fournir des échantillons $z_n$ à la fréquence $4f$ ;

un premier module de combinaison (481) pour combiner des échantillons successifs $z_n, z_{n-1}, z_{n-2}, z_{n-3}$ et fournir des échantillons $I_n = z_n - z_{n-1} - z_{n-2} + z_{n-3}$ à la fréquence $4f$ ;

un second module de combinaison (482) pour combiner des échantillons successifs $z_n, z_{n-1}, z_{n-2}, z_{n-3}$ et fournir des échantillons $Q_n = -z_n - z_{n-1} + z_{n-2} + z_{n-3}$ à la fréquence $4f$ ;

un troisième décimateur (491) pour décimer les échantillons $I_n$ avec un facteur de décimation 4 pour fournir des échantillons de composante en phase $I(kT)$ ;

un quatrième décimateur (492) pour décimer les échantillons $Q_n$ avec un facteur de décimation 4 pour fournir des échantillons de composante en quadrature $Q(kT)$.

5. Récepteur RFID selon la revendication 4, **caractérisé en ce que** ladite première composante du signal reçu est le signal reçu lui-même.

6. Récepteur RFID selon la revendication 4, **caractérisé en ce que** la première composante ($y^+(t)$) correspondant à la partie positive du signal reçu, une seconde composante ($y^-(t)$) correspondant à la partie négative du signal reçu, le signal reçu étant une combinaison de la première composante et la seconde composante, et que le démodulateur numérique en quadrature comprend en outre :

un troisième intégrateur (423) pour intégrer la seconde composante du signal reçu lorsque le premier signal logique est dans un état haut et fournir un troisième résultat d'intégration lorsque le premier signal logique est dans un état bas ;

un quatrième intégrateur (424) pour intégrer la seconde composante du signal reçu lorsque le second signal logique est à l'état haut et fournir un quatrième résultat d'intégration lorsque le second signal logique est à l'état bas ;

un second soustracteur (462) pour soustraire le quatrième résultat d'intégration au troisième résultat d'intégra-

tion, les échantillons $z_n$ étant obtenus comme combinaison des résultats des premier et second soustracteurs (461, 462).

7.  Récepteur RFID selon la revendication 5 ou 6, **caractérisé en ce que** le démodulateur numérique en quadrature comprend un premier convertisseur analogique numérique (350, 451) pour convertir les premier et second résultats d'intégration avant la soustraction par le premier soustracteur.

8.  Récepteur RFID selon la revendication 6, **caractérisé en ce qu'**il comprend un premier convertisseur analogique/numérique (451) pour convertir les premier et second résultats d'intégration avant la soustraction par le premier soustracteur ainsi qu'un second convertisseur analogique/numérique (452) pour convertir les troisième et quatrième résultats d'intégration avant la soustraction par le second soustracteur.

9.  Récepteur RFID selon l'une des revendications 4 à 8, **caractérisé en ce que** le démodulateur numérique en quadrature comprend un second démultiplexeur (731) recevant les échantillons $I_n$ et les démultiplexant vers quatre sorties, un troisième démultiplexeur (732) recevant les échantillons $Q_n$ et les démultiplexant vers quatre sorties, le démodulateur numérique en quadrature comprenant en outre un second module de décision (760) recevant au moins un échantillon d'une sortie du démultiplexeur et au moins un échantillon d'une sortie correspondante du troisième démultiplexeur, ledit second module de décision décidant, pendant un intervalle de temps où ladite porteuse n'est pas modulée, de l'instant de décimation dans les troisième et quatrième décimateurs (741, 742).

10. Récepteur RFID selon la revendication 9, **caractérisé en ce que** le second module de décision (760) reçoit deux échantillons consécutifs $I_n, I_{n-1}$ de deux sorties voisines du second démultiplexeur (731) et deux échantillons consécutifs $Q_n, Q_{n-1}$ de deux sorties voisines du troisième démultiplexeur (732), le second module de décision (760) décidant de l'instant de décimation dans les troisième et quatrième décimateurs en comparant en valeur absolue $I_n$ et $I_{n-1}$ avec un seuil prédéterminé et si l'échantillon $I_n$, resp. $I_{n-1}$, est inférieur à ce seuil en déterminant le signe de l'échantillon $Q_n$, resp. $Q_{n-1}$ correspondant.

11. Récepteur RFID selon la revendication 9, **caractérisé en ce que** le second module de décision (760) reçoit deux échantillons consécutifs $I_n, I_{n-1}$ de deux sorties voisines du second démultiplexeur (731) et deux échantillons consécutifs $Q_n, Q_{n-1}$ de deux sorties voisines du troisième démultiplexeur (732), le second module de décision (760) décidant de l'instant de décimation en comparant en valeur absolue $Q_n$ et $Q_{n-1}$ avec un seuil prédéterminé et si l'échantillon $Q_n$, resp. $Q_{n-1}$ est inférieur à ce seuil, en déterminant le signe de l'échantillon $I_n$, resp. $I_{n-1}$ correspondant.

12. Récepteur RFID selon la revendication 10 ou 11, **caractérisé en ce que** les échantillons de chacune des deux sorties voisines des second et troisième démultiplexeurs font l'objet d'un filtrage par des filtres passe-bas (751-754) avant d'être fournis au second module de décision (760).

## Patentansprüche

1.  RFID-Empfänger zum Empfangen eines Signals, das Übertragungsframes umfasst, wobei jedes Frame aus PSK-Symbolen gebildet ist und mit einer Steuersymbolsequenz vom Typ *a, a, a\*, a\*, a, a,...* beginnt, wobei das Signal auf eine Trägerfrequenz $f = 1/T$ moduliert ist, wobei der Empfänger einen digitalen Quadratur-Demodulator(110) umfasst, um bei einer Abtastfrequenz $f_e = 4f$ In-Phase-Abtastwerte und Quadratur-Abtastwerte an ein Symbolsynchronisationsmodul (120) zu liefern, sowie einen PSK-Demodulator (130) zum Demodulieren der PSK-Symbole, die durch das Symbolsynchronisationsmodul geliefert werden, wobei der Empfänger umfasst:

    einen ersten Demultiplexer (210), der eine Sequenz empfängt, die gebildet ist durch die aufeinanderfolgenden Quadratur-Abtastwerte, um vier verschachtelte Untersequenzen dieser Abtastwerte zu liefern, wobei jede Untersequenz durch einen von vier Abtastwerten der Sequenz von Abtastwerten gebildet ist;
    einen Vorzeichendetektor (220), der die Abtastwerte einer dieser Untersequenzen empfängt und ein Vorzeichensignal liefert;
    einen Vorzeichenkorrelator (231) zum Korrelieren des derart erhaltenen Vorzeichensignals mit einer Vorzeichensequenz mit vorbestimmter Länge;
    Korrelationsmittel (232-235) zum jeweiligen Korrelieren der verschiedenen Untersequenzen mit der Vorzeichensequenz;
    ein erstes Entscheidungsmodul (240), das aktiviert ist, wenn das Korrelationsergebnis des Vorzeichenkorrelators eine vorbestimmte Schwelle übersteigt, wobei das Entscheidungsmodul, wenn es aktiviert ist, die Untersequenz bestimmt, die das höchste Korrelationsergebnis liefert und hieraus einen Dezimierungszeitpunkt ableitet;

wenigstens einen ersten und einen zweiten Dezimierer (261, 262, 263, 264), die jeweils bei der Abtastfrequenz die In-Phase- und die Quadratur-Abtastwerte des digitalen Quadratur-Demodulators empfangen und sie an dem Dezimierungszeitpunkt dezimieren, um In-Phase- und Quadratur-Komponenten der Modulationssymbole bei der Baudrate zu liefern.

2. RFID-Empfänger nach Anspruch 1, **dadurch gekennzeichnet, dass** der erste Demultiplexer mittels eines Seriell-Parallel-Wandlers realisiert ist, der Worte aus vier aufeinanderfolgenden Abtastwerten bildet, wobei einer der Ausgänge des Wandlers mit dem Vorzeichenkorrelator verbunden ist.

3. RFID-Empfänger nach Anspruch 1 oder 2, **dadurch gekennzeichnet, dass** der Vorzeichendetektor einen Wert gleich -1 liefert, wenn ein Abtastwert am Eingang kleiner ist als ein vorbestimmter negativer Schwellenwert, einen Wert gleich +1, wenn der Abtastwert am Eingang größer ist als ein vorbestimmter positiver Schwellenwert, und einen Wert Null, wenn der Abtastwert am Eingang zwischen dem negativen Schwellenwert und dem positiven Schwellenwert enthalten ist.

4. RFID-Empfänger nach einem der vorhergehenden Ansprüche, **dadurch gekennzeichnet, dass** er ein Quadratlogiksignal ($g^+(t)$) bei der Frequenz $2f$ und ein zweites Quadratlogiksignal ($\overline{g}^+(t)$), das zu dem ersten invers ist, erzeugt, wobei der digitale Quadratur-Demodulator (110) umfasst:

einen ersten Integrator (321) zum Integrieren einer ersten Komponente des empfangenen Signals ($y(t)$, $y^+(t)$), wenn das erste Logiksignal in einem hohen Zustand ist, und Liefern eines ersten Integrationsergebnisses, wenn das erste Logiksignal in einem tiefen Zustand ist;

einen zweiten Integrator (322) zum Integrieren der Komponente des empfangenen Signals ($y(t)$, $y^+(t)$), wenn das zweite Logiksignal in einem hohen Zustand ist, und Liefern eines zweiten Integrationsergebnisses, wenn das zweite Logiksignal in einem tiefen Zustand ist;

einen ersten Subtrahierer (360, 461) zum Subtrahieren des zweiten Integrationsergebnisses vom ersten Integrationsergebnis, um Abtastwerte $z_n$ bei der Frequenz $4f$ zu liefern;

ein erstes Kombinationsmodul (481) zum Kombinieren aufeinanderfolgender Abtastwerte $z_n$, $z_{n-1}$, $z_{n-2}$, $z_{n-3}$ und Liefern von Abtastwerten $I_n=z_n-z_{n-1}-z_{n-2}+z_{n-3}$ bei der Frequenz $4f$;

ein zweites Kombinationsmodul (482) zum Kombinieren von aufeinanderfolgenden Abtastwerten $z_n$, $z_{n-1}$, $z_{n-2}$, $z_{n-3}$ und Liefern von Abtastwerten $Q_n=-z_n-z_{n-1}+z_{n-2}+z_{n-3}$ bei der Frequenz $4f$;

einen dritten Dezimierer (491) zum Dezimieren der Abtastwerte $I_n$ mit einem Dezimierungsfaktor 4, um Abtastwerte der In-Phase-Komponente $I(kT)$ zu liefern;

einen vierten Dezimierer (492) zum Dezimieren der Abtastwerte $Q_n$ mit einem Dezimierungsfaktor 4, um Abtastwerte der Quadratur-Komponente $Q(kT)$ zu liefern.

5. RFID-Empfänger nach Anspruch 4, **dadurch gekennzeichnet, dass** die erste Komponente des empfangenen Signals das empfangene Signal selbst ist.

6. RFID-Empfänger nach Anspruch 4, **dadurch gekennzeichnet, dass** die erste Komponente ($y^+(t)$) dem positiven Teil des empfangenen Signals entspricht, eine zweite Komponente ($y^-(t)$) dem negativen Teil des empfangenen Signals entspricht, das empfangene Signal eine Kombination der ersten Komponente und der zweiten Komponente ist, und dass der digitale Quadratur-Demodulator ferner umfasst:

einen dritten Integrator (423) zum Integrieren der zweiten Komponente des empfangenen Signals, wenn das erste Logiksignal in einem hohen Zustand ist, und Liefern eines dritten Integrationsergebnisses, wenn das erste Logiksignal in einem tiefen Zustand ist;

einen vierten Integrator (424) zum Integrieren der zweiten Komponente des empfangenen Signals, wenn das zweite Logiksignal im hohen Zustand ist, und Liefern eines vierten Integrationsergebnisses, wenn das zweite Logiksignal im tiefen Zustand ist;

einen zweiten Subtrahierer (462) zum Subtrahieren des vierten Integrationsergebnisses von dem dritten Integrationsergebnis, wobei die Abtastwerte $z_n$ erhalten werden als Kombination der Ergebnisse des ersten und des zweiten Subtrahierers (461, 462).

7. RFID-Empfänger nach Anspruch 5 oder 6, **dadurch gekennzeichnet, dass** der digitale Quadratur-Demodulator einen ersten Analog-Digital-Wandler (350, 451) umfasst, um die ersten und zweiten Integrationsergebnisse vor der Subtraktion durch den ersten Subtrahierer umzuwandeln.

8. RFID-Empfänger nach Anspruch 6, **dadurch gekennzeichnet, dass** er einen ersten Analog-Digital-Wandler (451) umfasst, um die ersten und zweiten Integrationsergebnisse vor der Subtraktion durch den ersten Subtrahierer umzuwandeln, sowie einen zweiten Analog-Digital-Wandler (452), um die dritten und vierten Integrationsergebnisse vor der Subtraktion durch den zweiten Subtrahierer umzuwandeln.

9. RFID-Empfänger nach einem der Ansprüche 4 bis 8, **dadurch gekennzeichnet, dass** der digitale Quadratur-Demodulator einen zweiten Demultiplexer (731) umfasst, der die Abtastwerte $I_n$ empfängt und sie zu vier Ausgängen demultiplexiert, und einen dritten Demultipexer (732), der die Abtastwerte $Q_n$ empfängt und sie zu vier Ausgängen demultiplexiert, wobei der digitale Quadratur-Demodulator ferner ein zweites Entscheidungsmodul (760) umfasst, das wenigstens einen Abtastwert eines Ausgangs des Demultiplexers und wenigstens einen Abtastwert eines entsprechenden Ausgangs des dritten Demultiplexers empfängt, wobei das zweite Entscheidungsmodul während eines Zeitintervalls, wo der Träger nicht moduliert ist, über den Zeitpunkt der Dezimierung in dem dritten und dem vierten Dezimierer (741, 742) entscheidet.

10. RFID-Empfänger nach Anspruch 9, **dadurch gekennzeichnet, dass** das zweite Entscheidungsmodul (760) zwei aufeinanderfolgende Abtastwerte $I_n$, $I_{n-1}$ von zwei benachbarten Ausgängen des zweiten Demultiplexers (731) und zwei aufeinanderfolgende Abtastwerte $Q_n$, $Q_{n-1}$ von zwei benachbarten Ausgängen des dritten Demultiplexers (732) empfängt, wobei das zweite Entscheidungsmodul (760) über den Zeitpunkt der Dezimierung in dem dritten und vierten Dezimierer entscheidet, indem es als Absolutwert $I_n$ und $I_{n-1}$ mit einer vorbestimmten Schwelle vergleicht, und wenn der Abtastwert $I_n$ beziehungsweise $I_{n-1}$ kleiner als diese Schwelle ist, das Vorzeichen des entsprechenden Abtastwerts $Q_n$ beziehungsweise $Q_{n-1}$ bestimmt.

11. RFID-Empfänger nach Anspruch 9, **dadurch gekennzeichnet, dass** das zweite Entscheidungsmodul (760) zwei aufeinanderfolgende Abtastwerte $I_n$, $I_{n-1}$ von zwei benachbarten Ausgängen des zweiten Demultiplexers (731) und zwei aufeinanderfolgende Abtastwerte $Q_n$, $Q_{n-1}$ von zwei benachbarten Ausgängen des dritten Demultiplexers (732) empfängt, wobei das zweite Entscheidungsmodul (760) über den Zeitpunkt der Dezimierung entscheidet, indem es als Absolutwert $Q_n$ und $Q_{n-1}$ mit einer vorbestimmten Schwelle vergleicht, und wenn der Abtastwert $Q_n$ beziehungsweise $Q_{n-1}$ kleiner als diese Schwelle ist, das Vorzeichen des entsprechenden Abtastwerts $I_n$ beziehungsweise $I_{n-1}$ bestimmt.

12. RFID-Empfänger nach Anspruch 10 oder 11, **dadurch gekennzeichnet, dass** die Abtastwerte jedes der zwei benachbarten Ausgänge des zweiten und dritten Demultiplexers Gegenstand einer Filterung durch Tiefpassfilter (751-754) sind, bevor sie an das zweite Entscheidungsmodul (760) geliefert werden.

**Claims**

1. A RFID receiver for receiving a signal comprising transmission frames, each frame consisting of PSK symbols and beginning with a sequence of $a,a,a^*,a^*,a,a,...$ type pilot symbols, the signal being modulated at a carrier frequency $f = 1/T$, the receiver comprising a quadrature digital demodulator (110) for providing, at a sampling frequency $f_e = 4f$, in-phase samples and quadrature samples to a symbol synchronization module (120), a PSK demodulator (130) for demodulating PSK symbols provided by the symbol synchronization module, said receiver comprising:

   a first demultiplexer (210) receiving a sequence formed by the consecutive quadrature samples for providing four interleaved subsequences of these samples, each subsequence consisting of one sample out of four of said sequence of samples;
   a sign detector (220) receiving the samples of one of these subsequences and providing a sign signal;
   a sign correlator (231) for correlating the sign signal thus obtained with a signed sequence having a predetermined length;
   correlation means (232-235) for correlating the different subsequences with said signed sequence respectively;
   a first decision module (240) activated when the correlation result of the sign correlator exceeds a predetermined threshold, the decision module determining, when activated, the subsequence providing the highest correlation result and deducing a decimation point in time therefrom;
   at least one first and one second decimator (261, 262, 263, 264) receiving respectively, at the sampling frequency, the in-phase and quadrature samples of the quadrature digital demodulator, and decimating them at said decimation point in time for providing in-phase and quadrature components of the modulation symbols at the baud rate.

2. The RFID receiver according to claim 1, **characterized in that** the first demultiplexer is made by means of a series/parallel converter forming words of four successive samples, one of the outputs of said converter being connected to the sign correlator.

3. The RFID receiver according to claim 1 or 2, **characterized in that** the sign detector provides a value equal to -1 when an input sample is lower than a predetermined negative threshold value, a value equal to +1 when the input sample is higher than a predetermined positive threshold value, and a zero value when the input sample is between said negative threshold value and said positive threshold value.

4. The RFID receiver according to one of the preceding claims, **characterized in that** it generates a square logic signal ($g^+(t)$) at the frequency $2f$ and a second square logic signal ($\overline{g}^+(t)$) being the inverse of the first one, the quadrature digital demodulator (110) comprising:

   a first integrator (321) for integrating a first component of the received signal ($y(t)$, $y^+(t)$) when the first logic signal is in a high state and providing a first integration result when the first logic signal is in a low state;
   a second integrator (322) for integrating said component of the received signal ($y(t)$, $y^+(t)$) when the second logic signal is in a high state and providing a second integration result when the second logic signal is in a low state;
   a first subtractor (360, 461) for subtracting the second integration result from the first integration result for providing samples $z_n$ at the frequency $4f$;
   a first combining module (481) for combining successive samples $z_n, z_{n-1}, z_{n-2}, z_{n-3}$ and providing the samples $I_n = z_n - z_{n-1} - z_{n-2} + z_{n-3}$ at the frequency $4f$;
   a second combining module (482) for combining successive samples $z_n, z_{n-1}, z_{n-2}, z_{n-3}$ and providing samples $Q_n = -z_n - z_{n-1} + z_{n-2} + z_{n-3}$ at the frequency $4f$;
   a third decimator (491) for decimating the samples In with a decimation factor 4 for providing in-phase component samples $I(kT)$;
   a fourth decimator (492) for decimating the samples $Q_n$ with a decimation factor 4 for providing quadrature component samples $Q(kT)$.

5. The RFID receiver according to claim 4, **characterized in that** said first component of the received signal is the received signal itself.

6. The RFID receiver according to claim 4, **characterized in that** the first component ($y^+(t)$) corresponds to the positive part of the received signal, a second component ($y^-(t)$) corresponds to the negative part of the received signal, the received signal being a combination of the first component and the second component, and **in that** the quadrature digital demodulator further comprises:

   a third integrator (423) for integrating the second component of the received signal when the first logic signal is in a high state and providing a third integration result when the first logic signal is in a low state;
   a fourth integrator (424) for integrating the second component of the received signal when the second logic signal is in the high state and providing a fourth integration result when the second logic signal is in the low state;
   a second subtractor (462) for subtracting the fourth integration result from the third integration result, the samples $z_n$ being obtained as a combination of the results of the first and second subtractors (461, 462).

7. The RFID receiver according to claim 5 or 6, **characterized in that** the quadrature digital demodulator comprises a first analogue-digital converter (350, 451) for converting the first and second integration results before the subtraction by the first subtractor.

8. The RFID receiver according to claim 6, **characterized in that** it comprises a first analogue/digital converter (451) for converting the first and second integration results before the subtraction by the first subtractor as well as a second analogue/digital converter (452) for converting the third and fourth integration results before the subtraction by the second subtractor.

9. The RFID receiver according to one of claims 4 to 8, **characterized in that** the quadrature digital demodulator comprises a second demultiplexer (731) receiving the samples In and demultiplexing them to four outputs, a third demultiplexer (732) receiving the samples $Q_n$ and demultiplexing them to four outputs, the quadrature digital demodulator further comprising a second decision module (760) receiving at least one sample from an output of the demultiplexer and at least one sample of a corresponding output of the third demultiplexer, said second decision module deciding, for a time interval when said carrier is not modulated, the decimation point in time in the third and fourth decimators (741, 742).

10. The RFID receiver according to claim 9, **characterized in that** the second decision module (760) receives two consecutive samples $I_n, I_{n-1}$ of two neighbouring outputs of the second demultiplexer (731) and two consecutive samples $Q_n, Q_{n-1}$ of two neighbouring outputs of the third demultiplexer (732), the second decision module (760) deciding the decimation point in time in the third and fourth decimators by comparing in absolute value $I_n$ and $I_{n-1}$ with a predetermined threshold and if the sample $I_n$, resp. $I_{n-1}$, is lower than this threshold by determining the sign of the corresponding sample $Q_n$, resp. $Q_{n-1}$.

11. The RFID receiver according to claim 9, **characterized in that** the second decision module (760) receives two consecutive samples $I_n, I_{n-1}$ from two neighbouring outputs of the second demultiplexer (731) and two consecutive samples $Q_n, Q_{n-1}$ from two neighbouring outputs of the third demultiplexer (732), the second decision module (760) deciding the decimation point in time by comparing in absolute value $Q_n$ and $Q_{n-1}$ with a predetermined threshold and if the sample $Q_n$, resp. $Q_{n-1}$ is lower than this threshold, by determining the sign of the corresponding sample $I_n$, resp. $I_{n-1}$.

12. The RFID receiver according to claim 10 or 11, **characterized in that** the samples of each of both neighbouring outputs of the second and third demultiplexers are filtered by low-pass filters (751-754) before being provided to the second decision module (760).

FIG. 1

FIG. 2

FIG. 3

FIG. 4

EP 3 116 181 B1

FIG. 5

$$I(kT) = z_{n-1} - z_{n-2} - z_{n-3} + z_{n-4}$$
$$Q(kT) = -z_{n-1} - z_{n-2} + z_{n-3} + z_{n-4}$$

620

630

$$I(kT) = z_n - z_{n-1} - z_{n-2} + z_{n-3}$$
$$Q(kT) = -z_n - z_{n-1} + z_{n-2} + z_{n-3}$$

$I$

610

650

640

# FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5504455 A

**Littérature non-brevet citée dans la description**

- **R.C.H. VAN DE BEEK et al.** A 13.56 Mbps PSK receiver for 13.56 MHz RFID applications. *Proc. of IEEE Radio Frequency Integrated Circuits Symposium (RFIC),* 17 Juin 2012, 239-242
- **M. GOSSAR et al.** Parameter analysis and reader architectures for broadband 13.56 MHz RFID systems. *Microwave Symposium Digest (MTT), IEEE MTT-S Int'l,* 23 Mai 2010, 1524-1527
- **D. SEEBACHER et al.** Measurement instrument selection for very high bit rate contactless transponder évaluation. *Proc. of IEEE INTERNATIONAL CONFERENCE ON RFID-TECHNOLOGIES AND APPLICATIONS,* 15 Septembre 2011, 140-147
- Identification cards-contactless integrated circuit cards- proximity cards. *Radio frequency power and signal interface*